# EUROPÄISCHE PATENTSCHRIFT

(11) **EP 0 360 065 B1**
(45) Veröffentlichungstag und Bekanntmachung des Hinweises auf die Patenterteilung: **22.12.1993**
(21) Anmeldenummer: 89116312.3
(22) Anmeldetag: 04.09.1989
(51) Int. Cl.: H04Q 11/04, H04Q 3/545

(54) **Verfahren zum Betrieb von Fernmeldevermittlungsanlagen, insbesondere PCM-Zeitmultiplex-Fernsprechvermittlungsanlagen, mit einem Zentralkoppelfeld und mit an dasselbe angeschlossenen dezentralen Teilkoppelfeldern**
Method for operating telecommunication exchanges, especially PCM time division telephone exchanges, with distributed switching networks connected to a central switching network
Procédé de contrôle de centraux de télécommunication, en particulier centraux téléphoniques MIC à division dans le temps avec plusieurs réseaux de commutation distribués connectés à un réseau de commutation central

(30) Priorität: 23.09.1988 DE 3832425
(43) Veröffentlichungstag der Anmeldung: 28.03.1990
(73) Patentinhaber: SIEMENS AKTIENGESELLSCHAFT, 80333 München (DE)
(72) Erfinder: Nagler, Werner, Dipl.-Ing., D-8021 Schäftlarn (DE)

(56) Entgegenhaltungen:
- EP-A- 0 125 602
- EP-A- 0 311 018
- EP-A- 0 320 627
- WO-A-83/01549

## Beschreibung

Die Erfindung betrifft eine Schaltungsanordnung für zentralgesteuerte Zeitmultiplex-Fernmeldevermittlungsanlagen, insbesondere PCM-Fernsprechvermittlungsanlagen, in denen ein der Verbindungsdurchschaltung dienendes zentrales Koppelfeld samt einem unter anderem dessen Steuerung sowie einer hierfür erforderlichen Schaltkennzeichenverarbeitung dienenden programmgesteuerten zentralen Prozessor vorgesehen ist, und in denen eine Mehrzahl von dezentralen Anschlußgruppen mit je einem Teilkoppelfeld zum außenseitigen Anschluß von Verbindungs- und/oder Teilnehmerleitungen und mit einer dezentralen Steuereinrichtung zur Schaltkennzeichen aufnahme von diesen Leitungen, zur Schaltkennzeichenvorverarbeitung und -weiterleitung an den zentralen Prozessor und zur Schaltkennzeichenaussendung auf diese Leitungen ausgestattet ist, und in denen in diesen Anschlußgruppen die Teilkoppelfelder innenseitig über Zeitmultiplex-Linkleitungen mit Anschlüssen des Koppelfeldes verbunden sind, und in denen für einen der obigen Schaltkennzeichenbehandlung dienenden Datenaustausch zwischen den dezentralen Steuereinrichtungen einerseits und dem Prozessor andererseits jeweils pro dezentrale Steuereinrichtung je eine Datenverbindung von jenem über das Koppelfeld und über je einen Kanal der betreffenden Zeitmultiplex-Linkleitung zu den dezentralen Steuereinrichtungen in betriebsbereiten Zustand gebracht bzw. in ihm gehalten wird, und in denen jeweils zwei Anschlußgruppen paarweise einander zuordnet und in jeder derselben zum außenseitigen Anschluß von Teilnehmer- und/oder Verbindungs-Leitungen dienenden und innerhalb der jeweiligen Anschlußgruppe im Normalbetrieb mit ihrem Teilkoppelfeld verbundene Anschlußeinheiten, z.B. Teilnehmeranschlußschaltungen, Mehrfachteilnehmeranschlußschaltungen, Verbindungsleitungs(-mehrfach-)abschlußschaltungen und dergleichen, im Notbetrieb teilweise umschaltbar sind, wodurch die Anschlußeinheiten jeweils einer ersten dieser beiden Anschlußgruppen notbetriebsbedingt zusätzlich an das Teilkoppelfeld der jeweils anderen, also einer jeweils zweiten Anschlußgruppe angeschaltet werden, und wodurch für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird.

Eine Schaltungsanordnung dieser Art ist bereits durch die europäische Anmeldung EP-A-0 254 855 bekannt. Hierin sind zwei parallele zentrale Prozessoren beschrieben. Im Normalbetrieb arbeitet immer einer der beiden Prozessoren, während der andere in allgemein bekannter Weise für eine Ersatzschaltung bereitsteht. In dieser europäischen Patentanmeldung ist nun weiterhin beschrieben, daß von den paarweise einander zugeordneten Anschlußgruppen jeweils ein Gruppensteuerwerk außer Betrieb genommen werden kann, und daß der weitere Vermittlungsbetrieb über beide Teilkoppelfelder der beiden jeweils paarweise einander zugeordneten Anschlußgruppen vorübergehend mit Hilfe des jeweils anderen Gruppensteuerwerkes abgewickelt wird, welches dann also den Vermittlungsbetrieb in den beiden Teilkoppelfeldern der beiden Anschlußgruppen abwickelt. Dabei ist dann der eine der beiden Prozessoren steuernd mit tätig, und mit ihm stehen die den Vermittlungsbetrieb abwickelnden Gruppensteuerwerke über Steuerkanäle in Verbindung, die über dasjenige zentrale Koppelfeld durchgeschaltet sind, welches dem zur Zeit tätigen zentralen Prozessor zugeordnet ist. Das in diesem bekannten Falle dabei außer Betrieb genommene Gruppensteuerwerk in jedem der Anschlußgruppen-Paare wird gemäß der Beschreibung der oben genannten europäischen Patentschrift seitens des jeweils anderen zentralen Prozessors angesteuert, also seitens desjenigen zentralen Prozessors, der in der momentanen Betriebssituation nicht an der Abwicklung des Vermittlungsbetriebes aktiv beteiligt ist. Dieser zentrale Prozessor baut über das ihm zugeordnete zentrale Koppelfeld (das zentrale Koppelfeld ist gemäß der genannten eurpäischen Patentanmeldung also ebenso wie die zentralen Prozessoren aus Sicherheitsgründen gedoppelt) Datenverbindungen zu den zur Zeit außer Betrieb befindlichen Gruppensteuerwerken auf, und zwar solche Datenverbindungen, die als Steuerkanäle zwischen dem letztgenannten zentralen Prozessor einerseits und den zur Zeit außer Betrieb befindlichen Gruppensteuerwerken dienen. (Diese Datenverbindungen sind also nicht zu verwechseln mit solchen Datenverbindungen, die von mit Datenstationen ausgestatteten Teilnehmern teilnehmerindividuell gewählt und als gewählte Verbindungen aufgebaut werden.) Die hier behandelten und zu Steuerzwecken zwischen zentralem Prozessor und Gruppensteuerwerken aufgebauten Datenverbindungen verlaufen jeweils über einen Kanal derjenigen Zeitmultiplexleitung, die pro Anschlußgruppe vorgesehen ist, und die einleitend bereits erwähnt wurde. Im bekannten Falle sind diese Zeitmultiplexleitungen ebenso wie das zentrale Koppelfeld und wie der zentrale Prozessor dupliziert.

Im bekannten Falle wird also das jeweils zur Zeit nicht für die Abwicklung des Vermittlungsbetriebs benutzte zentrale Koppelfeld dazu ausgenutzt, die beschriebenen Datenverbindungen herzustellen, und zwar zwischen dem zur Zeit nicht am Vermittlungsbetrieb beteiligten zentralen Prozessor und den zur Zeit ebenfalls Vermittlungsbetrieb nicht abwickelnden Gruppensteuerwerk. Diese Datenverbindungen dienen im bekannten Falle zur Abwicklung von Datenladeprozeduren vorbereitend für eine Prozessor-Ersatzschaltung.

Es gibt jedoch auch Betriebsfälle, in denen der andere zentrale Prozessor, also derjenige, der am Vermittlungsbetrieb mitwirkt und in der Notbetriebssituation auch weiterführt, und zwar mit denjenigen Gruppensteuerwerken in den Anschlußgruppen-Paaren, die ebenfalls in der Notbetriebssituation den Vermittlungsbetrieb fortsetzen, zusätzlich mit den jeweils anderen Gruppensteuerwerken, die also in der Notbetriebssituation nicht am Vermittlungsbetrieb beteiligt sind, in Verbindung treten Für die Erfindung besteht die Aufgabe, ein Zustandekommen von Verbindungen der zuletzt angesprochenen Art zu ermöglichen und zugleich für die Weiterführung des Vermittlungsbetriebs in der Notbetriebssituation die Verkehrsleistung einer entsprechenden Vermittlungsstelle hinsichtlich des Verbindungswege-Angebotes zwischen Anschlußgruppen einerseits und zentralem Koppelfeld andererseits möglichst hoch zu halten.

Die Erfindung löst die ihr gestellte Aufgabe dadurch, daß den Linkleitungen je eine eigene Umschalteeinrichtung pro Anschlußgruppe zugeordnet wird,
daß die Linkleitungen notbetriebsbedingt von dem Teilkoppelfeld der einen Anschlußgruppe zu dem der anderen Anschlußgruppe umgeschaltet werden, und
daß hierbei der für die Datenverbindung zwischen dem zentralen Prozessor und der außer Betrieb genommenen dezentralen Steuereinrichtung als Steuerkanal verwendete Kanal in einer der betreffenden Linkleitung zugeordneten Linkabschlußschaltung zeitmultiplextechnisch zurückgeschaltet wird zu der dezentralen Steuereinrichtung derjenigen Anschlußgruppe, deren Teilkoppelfeld notbetriebsbedingt außer Betrieb gegangen ist.

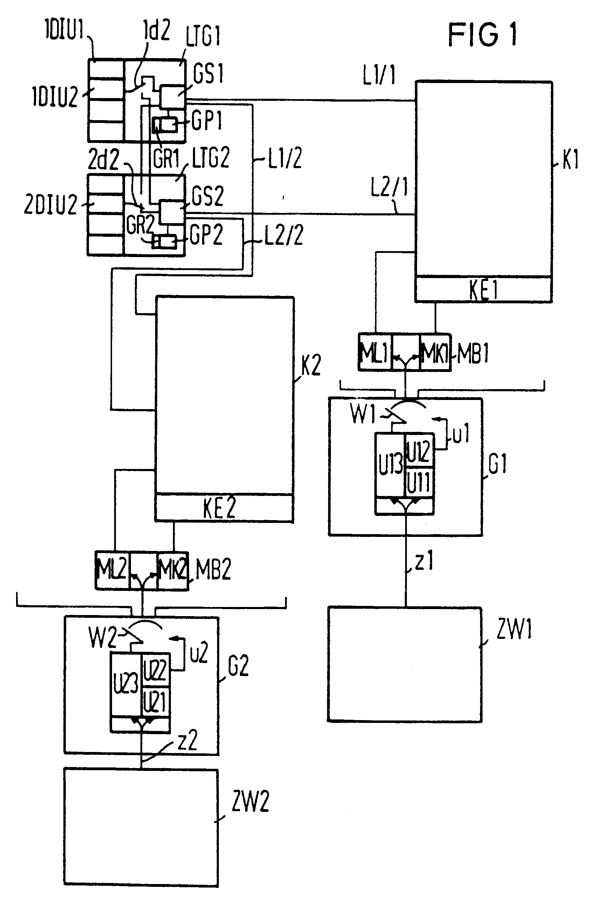

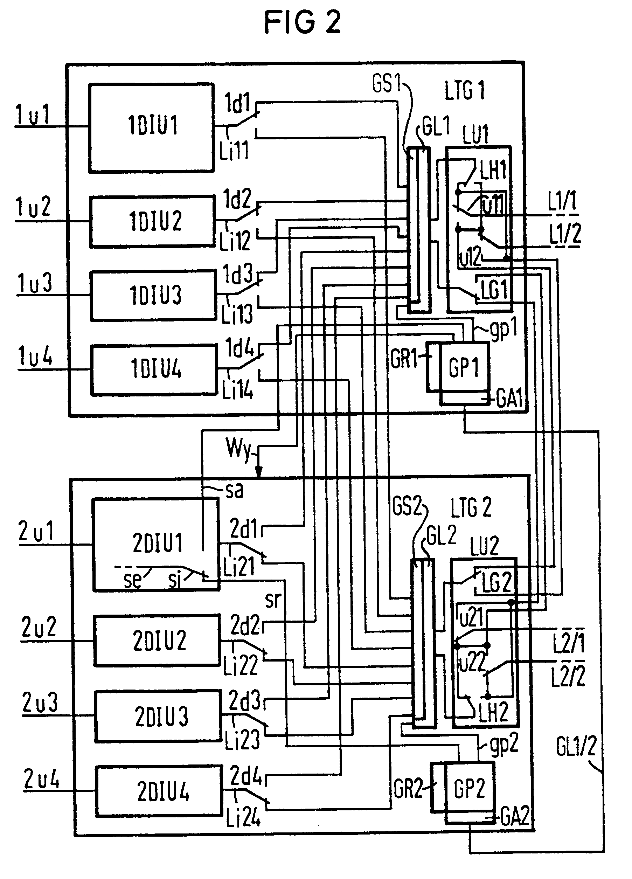

In den Zeichnungen Figur 1 und Figur 2 ist ein Ausführungsbeispiel der Erfindung nur in wesentlich zu ihrem Verständnis beitragenden Bestandteilen dargestellt, worauf dieselbe jedoch keineswegs beschränkt ist. Dabei zeigt Figur 1 auszugsweise eine Fernsprechvermittlungsanlage der Art, wie sie auch in der deutschen Patentschrift DE-C-3 128 365 beschrieben ist. Figur 2 zeigt weitere erfindungswesentliche Details.

Bevor die Beschreibung speziell auf die erfindungswesentlichen Besonderheiten des Ausführungsbeispieles eingeht, erläutert sie die Arbeitsweise einer neuzeitlichen Fernsprechvermittlungsanlage, in der die Erfindung angewendet ist. Dabei geht die Beschreibung von bekannten Zeitmultiplex-Fernsprechvermittlungsanalgen mit PCM-Technik aus, wie sie in der Fachliteratur vielfältig und detailliert beschrieben sind, beispielsweise in der weiter oben genannten Zeitschrift "telcom report". (4. Jahrgang, 1981, Beiheft) Hierin sind unter anderem auf Seite 19 ff periphere Anschlußgruppen in diesem Fernsprechvermittlungssystem beschrieben. Wie es ähnlich auch in Bild 1 auf Seite 8 der genannten Zeitschrift dargestellt ist, sind Koppelfeld (SN) und zentraler Prozessor (CP) gedoppelt vorgesehen, in Figur 1 mit "K1" und "K2" und mit "ZW1" und "ZW2" bezeichnet.

In den Zeichnungen sind zwei Anschlußgruppen LTG1 und LTG2 auszugsweise dargestellt, die zu einer zentralgesteuerten Zeitmultiplex-Fernsprechvermittlungsanlage in PCM-Technik gemäß Figur 1 gehören. Sie sind in an sich bekannter Weise über Zeitmultiplex-Leitungen L1/1, L2/1, L1/2 und L2/2 an das mehrstufige, Zeitmultiplex-Eingänge und Zeitmultiplex-Ausgänge aufweisende zentrale und gedoppelte Koppelfeld K1/K2 gemäß Figur 1 angeschlossen. Dabei ist jeder dieser Anschlüsse entsprechend dieser Dopplung des Koppelfeldes ein zweifacher. Jede dieser beiden pro Anschlußgruppe, zum Beispiel LTG1, vorgesehenen Zeitmultiplex-Leitungen weist für jede der beiden Übertragungsrichtungen je eine größere Anzahl von zum Beispiel dreißig Kanälen auf und ist dementsprechend - wie auch in der weiter oben genannten Patentschrift im Detail dargestellt und beschrieben - sowohl an je einen Zeitmultiplex-Eingang als auch an je einen Zeitmultiplex-Ausgang jedes dieser beiden Koppelfelder angeschlossen.

Ferner ist gemäß Figur 1 zu jedem der beiden parallelen Koppelfelder K1/K2 je ein zentraler Prozessor ZW1 bzw. ZW2 vorgesehen, mit dessen Hilfe die gesamten Steuerungsvorgänge für die Verbindungsherstellung über das jeweilige zentrale Koppelfeld K1 bzw. K2 in an sich bekannter Weise mittels einer Puffereinrichtung MB1/MK1 bzw. MB2/MK2 und einer Koppelfeldeinstelleinrichtung KE1 bzw. KE2 bewerkstelligt werden, was im einzelnen in dem genannten Patent beschrieben ist. Hierzu werden Informationen durch den zentralen Prozessor ZW1 bzw. ZW2 (zentrales Steuerwerk) von den Anschlußgruppen, zum Beispiel LTG1 und weiteren, hereingeholt sowie in umgekehrter Richtung zu ihnen hin abgegeben. Hierbei wirken dezentrale Steuereinrichtungen GP1, GP2 und weitere ihresgleichen in den Anschlußgruppen in bekannter Weise mit. Für diesen Informationsaustausch werden die Anschlußgruppen und die Anschlußeinheiten in ihnen adressiert angesteuert.

Von den beiden zentralen Koppelfeldern K1 und K2 und den beiden zentralen Prozessoren ist jeweils ein Koppelfeld zum Beispiel K1 und ein zentraler Prozessor, zum Beispiel ZW1, in Betrieb, während das andere Koppelfeld und der andere Prozessor für den Fall einer notwendig werdenden Ersatzschaltung zur Verfügung stehen. Zur Vereinfachung der weiteren allgemeinen Beschreibung ist deshalb vorläufig immer nur vom zentralen Koppelfeld K1 und vom zentralen Prozessor ZW1 (also jeweils nur von einem) die Rede.

Den vom zentralen Prozessor ZW1 an die genannten Anschlußgruppen zu übertragenden Informationen, die auch Abrufbefehle zum Abruf von von den Anschlußgruppen LTG1, LTG2 bzw. von den Anschlußeinheiten 1DIU1 bis 1DIU4 zum zentralen Steuerwerk zu übertragenden Informationen, zum Beispiel Wahlinformationen, sein können, ist jeweils eine die betreffende Anschlußeinheit bezeichnende Adresse vorangestellt. Ist nun eine Anschlußeinheit vom zentralen Prozessor ZW1 anzusteuern zwecks Übertragung einer Information (gegebenenfalls Abrufbefehl) von diesem an jene, so überträgt dasselbe die Adresse und die Information sukzessive nacheinander zunächst zu einer Eingabe-Ausgabe-Einrichtung G1 (in "telcom report": IOP). Diese nimmt beide zunächst auf und speichert sie.

Wie in der zuvor genannten Patentschrift erläutert ist, bestehen zwischen der Eingabe-Ausgabe-Einrichtung G1 einerseits und jeder der Anschlußgruppen, und zwar ihren dezentralen Steuereinrichtungen, zum Beispiel GP1, GP2 andererseits über die Zeitmultiplex-Leitungen L1/1 bzw. L2/1, und zwar über jeweils einen Kanal pro Zeitmultiplexleitung, sowie über das Koppelfeld K1 und über Puffereinrichtungen MB1/ML1 Datenverbindungen (s.u.!). Hat nun die Eingabe-Ausgabeeinrichtung eine Information nebst Adresse vom zentralen Steuerwerk ZW1 über den Weg z1 empfangen, so führt sie von dieser Adresse einen ersten Adressenteil unter anderem einem Adressen-Signalkanal-Umsetzer U11/U12 zu. Dieser erste Adressenteil entspricht der jeweiligen Anschlußgruppe und damit der ihr zugeordneten Datenverbindung über Puffereinrichtung MB1 und Koppelfeld K1. Der genannte Umsetzer U11/U12 gibt eine dem ersten Adressenteil entsprechende Steuerinformation ab, die er über den Steuerweg u1 einem elektronichen Wähler W1 zuführt, welcher dadurch auf den betreffenden Signalkanal (über MB1 verlaufend) eingestellt wird. Dadurch ist die Eingabe-Ausgabe-Einrichtung G1 über diesen mit der dezentralen Steuereinrichtung, zum Beispiel GP1, der betreffenden Anschlußgruppe, zum Beispiel LTG1, verbunden und überträgt nun zu dieser die Information nebst vollständiger Adresse, das heißt einschließlich erstem Adressenteil.

Es ist eine größere Anzahl von einem Anschluß von verschiedenen Verkehrsrichtungen zugeordneten Zeitmultiplex-Verbindungsleitungen dienenden Anschlußgruppen vorgesehen, von denen die beiden Anschlußgruppen LTG1 und LTG2 auszugsweise dargestellt sind. Bedeutung, Aufgaben und Funktionen dieser Anschlußgruppen sind in der angegebenen Zeitschrift sehr ausführlich beschrieben, wovon im vorliegenden Falle als von bekannten Tatsachen ausgegangen wird.

Wie bereits erwähnt und wie auch aus der genannten Zeitschrift weiterhin hervorgeht, enthält jede der Anschlußgruppen jeweils eine Mehrzahl von Anschlußeinheiten. Diese dienen in bekannter Weise dem Anschluß von Teilnehmerleitungen, Verbindungsleitungen oder Übertragungssystemen mit verbindungsindividuell belegbaren Kanälen. Es gibt verschiedene Arten von Anschlußeinheiten, zum Beispiel solche für Analog-Teilnehmerleitungen, andere für Digital-Teilnehmerleitungen, andere für Analog-Verbindungsleitungen und dergleichen. Ebenso gibt es Anschlußeinheiten, die dem Anschluß jeweils einer Zeitmultiplex-Verbindungsleitung dienen, welche bekanntlich eine größere Anzahl von zum Beispiel vierundzwanzig oder dreißig verbindungsindividuell belegbaren PCM-Kanälen umfassen kann. Bekanntlich handelt es sich hierbei genaugenommen um jeweils ein Kanalpaar pro Verbindung, wobei jeweils ein Kanal für die eine Übertragungsrichtung und der andere für die andere Übertragungsrichtung vorgesehen ist.

In der genannten Zeitschrift ist ferner beschrieben, daß eine Anschlußeinheit bei Analog-Teilnehmerleitungen bzw. Analog-Verbindungsleitungen jeweils für eine Mehrzahl von Leitungen vorgesehen ist. Anschlußeinheiten für zeitmultiplex betriebene Übertragungs-Systeme, die jeweils eine größere Anzahl von Kanalpaaren umfassen (siehe oben), sind so aufgebaut, daß an eine Anschlußeinheit ein Übertragungssystem mit vierundzwanzig oder dreißig Kanalpaaren angeschlossen ist. In der genannten Zeitschrift ist ferner beschrieben, daß in einer Anschlußgruppe, die mit Anschlußeinheiten für Zeitmultiplex-Übertragungssysteme bestückt ist, insgesamt vier oder fünf solche Anschlußeinheiten vorgesehen sind. Ferner ist in der genannten Zeitschrift angegeben, daß innerhalb einer Anschlußgruppe Anschlußeinheiten mit einer Zeitmultiplex-Koppeleinrichtung der betreffenden Anschlußgruppe ("Teilkoppelfeld") verbunden und über diese mit Kanälen des der betreffenden Anschlußgruppe entsprechenden Zeitmultiplex-Einganges und des entsprechenden Zeitmultiplex-Ausganges des zentralen Koppelfeldes verbindbar sind.

Bei dieser zahlenmäßigen Zuordnung geht es unter anderem immer auch darum, daß die Verkehrsbelastungen auf den verschiedenen Teilabschnitten der Verbindungswege möglichst gut aneinander angepaßt sind. Praktisch bedeutet dies, daß die Anzahl von Kanalpaaren, die die an die Anschlußeinheiten einer Anschlußgruppe angeschlossenen Zeitmultiplex-Verbindungsleitungen (PCM-Übertragungssysteme), von denen jedes einer anderen Verkehrsrichtung zugeordnet sein kann, die aber auch zu zweit oder zu mehreren jeweils gemeinsam ein und derselben Verkehrsrichtung zugeordnet sein können, insgesamt umfassen, etwa gleich der Anzahl von Kanalpaaren ist, die diejenige Zeitmultiplex-Leitung umfaßt, die die betreffende Anschlußgruppe mit dem zentralen Koppelfeld verbindet. So mögen also die Übertragungssysteme 1u1 bis 1u4 in Figur 2 etwa die gleiche Anzahl von Kanalpaaren aufweisen, wie die Zeitmultiplex-Leitung L1/1.

Da es nun vorkommen kann, daß die dezentralen Steuereinrichtungen (GP), oder Teilkoppelfelder (GS) störungsbedingt ausfallen können, wurde dies zur Folge haben, daß auch die Zeitmultiplex-Übertragungssysteme, die jeweils an die Anschlußeinheiten der betreffenden Anschlußgruppe angeschlossen sind, ebenfalls sämtlich nicht mehr für eine Verbindungsherstellung verfügbar sind. Da in der Vermittlungstechnik bei den vorgegebenen Werten und Daten bezüglich der Anzahlen von Kanalpaaren pro Verkehrsrichtung häufig nur ein einziges Übertragungssystem pro Verkehrsrichtung vorgesehen zu werden braucht, würde bei Ausfall einer dezentralen Steuereinrichtung oder eines Teilkoppelfeldes auch das betreffende einzige Übertragungssystem pro Verkehrsrichtung ausfallen. Gleiches gilt bei Ausfall der dezentralen Steuereinrichtung zum Beispiel GP1, einer Anschlußgruppe, zum Beispiel LTG1.

Eine solche unvorteilhafte Möglichkeit wird durch die Maßnahme ausgeschlossen, daß jeweils zwei Anschlußgruppen paarweise einander zugeordnet sind. Was diesbezüglich für die beiden in der Zeichnung auszugsweise dargestellten Anschlußgruppen LTG1 und LTG2 gilt, gilt ebenso für alle weiteren Anschlußgruppen mit Anschlußeinrichtungen, an die PCM-Übertragungssysteme in der angegebenen Weise angeschlossen sind. Weiterhin ist vorgesehen, daß die Anschlußeinrichtungen 1DIU1 bis 1DIU4 und 2DIU1 bis 2DIU4 jeder dieser beiden Anschlußgruppen LTG1 und LTG2, die im Normalbetrieb mit der Zeitmultiplex-Koppeleinrichtung Gs1 bzw. Gs2 ihrer eigenen Anschlußgruppe LTG1 bzw. LTG2 verbunden sind, im Notbetrieb einer dieser beiden Anschlußgruppen, zum Beispiel LTG2, zu der ein Teilkoppelfeld bildenden Zeitmultiplex-Koppeleinrichtung, zum Beispiel GS1, der jeweils anderen Anschlußgruppe, zum Beispiel LTG1 umschaltbar sind. Hierzu sind Umschalter 1d1 bis 1d4 und 2d1 bis 2d4 vorgesehen. Diese sind in der Zeichnung in der dem Normalbetrieb entsprechenden Ruhelage dargestellt. Sie werden bei einem Wechsel vom Normalbetrieb zum Notbetrieb aus ihrer dargestellten Ruhelage in ihre Arbeitslage umgeschaltet. Die Notbetriebssituation besteht, wenn bei einer Anschlußgruppe störungsbedingt ein Ausfall der oben angegebenen Art eintritt.

Werden nun die Umschalter 2d1 bis 2d4 bei einem Übergang von der Normalbetriebs-Situation in die Notbetriebs-Situation störungsbedingt aus ihrer dargestellten Ruhelage in ihre Arbeitslage umgeschaltet, so sind von da an die Anschlußeinheiten 2DIU bis 2DIU4 der Anschlußgruppe LTG2 mit der Zeitmultiplex-Koppeleinrichtung GS1 der Anschlußgruppe LTG1 verbunden. Infolgedessen können die PCM-Übertragungssysteme 2u1 bis 2u4 mit ihren verbindungsindividuell belegbaren Kanälen weiterhin betrieben werden. Jedes dieser PCM-Übertragungssysteme kann einzeln einer eigenen Verkehrsrichtung zugeordnet sein. Es können auch zwei oder mehr PCM-Übertragungssysteme einer Verkehrsrichtung zugeordnet sein, das heißt, sie können also in vermittlungstechnischer Hinsicht ein gemeinsames Bündel von Kanalpaaren bilden. Besondere Bedeutung in den hier behandelten Zusammenhängen hat aber der Fall, daß für eine Verkehrsrichtung nur ein einziges PCM-Übertragungssystem mit der betreffenden Anzahl von Kanalpaaren vorgesehen ist.

Wie bereits weiter oben erwähnt wurde, werden die Verbindungen über das zentrale Koppelfeld K1 hergestellt. Hierbei wirkt der zentrale Prozessor ZW1 mit. In dem zentralen Prozessor sind die Anschlußgruppen, die in ihnen jeweils enthaltenen Anschlußeinheiten sowie die über jede derselben geführten Kanalpaare mit Hilfe von Adressen ansteuerbar. Es kann nun vorgesehen sein, daß jede der Anschlußeinheiten sowohl mit Hilfe einer Normalbetriebs-Adresse als auch mit Hilfe einer Notbetriebs-Adresse vom zentralen Prozessor her ansteuerbar ist. Diese Normalbetriebs-Adressen und Notbetriebs-Adressen sind also verwendbar nach betriebsgemäßem jeweiligem Bedarf. Es ist also vorgesehen, daß die Anschlußeinheiten, die mit PCM-Übertragungssystemen beschaltet sind, von dem zentralen Prozessor mittels jeweils einer Normalbetriebs-Adresse und jeweils einer Notbetriebs-Adresse ansteuerbar sind, und daß bei Eintritt einer Betriebsstörung in einer Anschlußgruppe, z.B. LTG2, bzw. deren Gruppensteuereinrichtung, z.B. GP2, die beim Normalbetrieb derselben im zentralen Prozessor gesperrten Notbetriebs-Adressen der betreffenden Anschlußeinheiten, z.B. 2DIU1 bis 2DIU4, entsperrt und stattdessen die Normalbetriebs-Adressen dieser Anschlußeinheiten gesperrt werden. Auf nicht im einzelnen dargestellte Weise wird also dem zentralen Prozessor gemeldet, daß eine Anschlußgruppe, z.B. LTG2, vom Normalbetrieb in den Notbetrieb übergeht. Aufgrund dieser Meldung nimmt der zentrale Prozessor den zuvor angegebenen Vorgang der Entsperrung der Notbetriebs-Adressen der betreffenden Anschlußeinheiten sowie der Sperrung der Normalbetriebs-Adressen dieser Anschlußeinheiten vor. Dies gilt in gleicher Weise auch für Ansteuer-Adressen der Kanalpaare, die über die betreffenden Anschlußeinheiten geführt sind. In diesem Zusammenhang ist außerdem vorgesehen, daß die Anschlußeinheiten, zum Beispiel 2DIU1 bis 2DIU4 von dem zentralen Prozessor mittels der Normalbetriebs-Adresse über deren zugeordnete Anschlußgruppe, zum Beispiel LTG2, direkt und mittels der Notbetriebs-Adresse über die jeweils andere Anschlußgruppe, zum Beispiel LTG1 ansteuerbar sind.

Wie bereits erwähnt wurde, kann eine störungsbedingte Notbetriebssituation dadurch verursacht sein, daß die dezentrale Steuereinrichtung, zum Beispiel GP2, und/oder die Zeitmultiplex-Koppeleinrichtung, zum Beispiel GS1, der betreffenden Anschlußgruppe nicht die erforderliche Funktionsfähigkeit aufweist. Dies ist für den zentralen Prozessor anhand der kontinuierlichen Durchführung eines Überwachungsverfahrens erkennbar, das im einzelnen in der bereits genannten Zeitschrift "telcom report", sowie in der deutschen Offenlegungsschrift DE-A-3 106 903 beschrieben ist. Erkennt der zentrale Prozessor eine Betriebsstörung, die zum Beispiel die Anschlußgruppe LTG2 betrifft, so erfolgt der gesamte weitere Datenaustausch zwischen zentralem Prozessor ZW1 und den Anschlußeinheiten 2DIU1 bis 2DIU4 der von der Betriebsstörung betroffenen Anschlußgruppe LTG2 für die Dauer der Betriebsstörung über die Anschlußgruppe LTG1. Hierzu werden sämtliche Umschalter in der betroffenen Anschlußgruppe LTG2 aus ihrer dargestellten Ruhelage in weiter unten noch mehr im Detail beschriebener Weise in ihre Arbeitslage umgelegt. Dies kann auf die Weise erfolgen, daß zunächst die aufgetretene Betriebsstörung innerhalb der von ihr betroffenen Anschlußgruppe selber erkannt wird, oder daß der zentrale Prozessor ZW1 die die Anschlußgruppe LTG2 betreffende Betriebsstörung erkennt; er überträgt dann eine entsprechende Information hierüber an die dezentrale Steuereinrichtung GP1 der paarweise zugeordneten Anschlußgruppe LTG1, worauf jene dann Befehle zur Betätigung der genannten vier Umschalter in der Anschlußgruppe LTG2 an diese abgibt.

Bei Eintritt einer die Anschlußgruppe LTG2 betreffenden Betriebsstörung werden also die Umschalter 2d1 bis 2d4 betätigt. Dementsprechend werden die Anschlußeinheiten 2DIU1 bis 2DIU4 mit der Zeitmultiplex-Koppeleinrichtung GS1 der Anschlußgruppe LTG1 verbunden. Diese Umschaltungen erfolgen - wie weiter unten noch genauer erläutert wird, in erfindungsgemäßer Weise verbindungsindividuell.

Erkennt der zentrale Prozessor ZW1 die die Betriebsstörung der Anschlußgruppe LTG2 betreffende Funktionsstörung, erkennt er also, daß der weitere Datenaustausch mit den entsprechenden Anschlußeinheiten 2DIU1 bis 2DIU4 über den Signalkanal der Anschlußgruppe LTG1 abzuwickeln ist, so gibt er eine entsprechende Information auch an den Adressen-Signal-Umsetzer U11/U12 in der Eingabe-Ausgabe-Einrichtung G1. Durch diese Information wird die die Anschlußeinheiten 2DIU1 bis 2DIU4 in der Anschlußgruppe LTG2 betreffende Signalkanalnummer vorübergehend geändert. Praktisch bedeutet dies, daß für die Dauer der Betriebsstörung der Anschlußgruppe LTG2 bei Ansteuerung einer ihrer Anschlußeinheiten der Adressen-Signalkanal-Umsetzer bei Erhalt einer Adresse mit einem die Anschlußgruppe LTG2 bezeichnenden ersten Adressenteil eine Steuerinformation über den Steuerweg u1 zum elektronsichen Wähler W1 hin abgibt, die bewirkt, daß in diesem Falle anstelle des Signalkanals der Anschlußgruppe LTG2 vielmehr der Signalkanal der Anschlußgruppe LTG1 durch den elektronsichen Wähler W1 angesteuert wird. Der zentrale Prozessor gibt also zur Ansteuerung einer Anschlußeinheit 2DIU1 bis 2DIU4 im Zustand der Betriebsstörung der Anschlußgruppe LTG2 die Adresse und die Information für die betreffende Anschlußgruppe ebenso, wie im Zustand des Normalbetriebs der Anschlußgruppe LTG2 ab. Im Adressen-Signalkanal-Umsetzer U11/U12 ist für die Dauer der Betriebsstörung der Anschlußgruppe LTG2 festgehalten, daß anstelle ihres Signalkanales vielmehr der Signalkanal der Anschlußgruppe LTG1 anzusteuern ist. Die die Betriebsstörung der Anschlußgruppe LTG2 betreffende Umleitung der Informationen für ihre Anschlußeinheiten erfolgt also in der Eingabe-Ausgabe-Einrichtung mit Hilfe des elektronischen Wählers W1 aufgrund der vorläufigen Änderung der im Adressen-Signalkanal-Umsetzer U11/U12 gespeicherten Signalkanalnummern, die als Steuerinformationen fallweise aus jenem abgerufen und zur Steuerung des Wählers W1 zugeführt werden.

Wie bereits aus dem bisherigen Teil der Beschreibung hervorgeht, ist ein der Verbindungsdurchschaltung dienendes zentrales Koppelfeld K1/K2 tatsächlich zweifach vorgesehen. Ebenso ist ein zentraler Prozessor ZW1/ZW2 dupliziert vorgesehen, wobei das eine Koppelfeld, zum Beispiel K1 und der eine zentrale Prozessor, zum Beispiel ZW1, einander zugeordnet sind, was auch für das andere Koppelfeld und den anderen zentralen Prozessor gilt. Der zentrale Prozessor dient in bekannter Weise unter anderem der Steuerung seines zentralen Koppelfeldes sowie einer hierfür erforderlichen Schaltkennzeichenverarbeitung. Jeder der beiden Prozessoren ist in bekannter Weise programmgesteuert. Die Doppelung von Koppelfeld und zentralem Prozessor dient in bekannter Weise zur Ersatzschaltemöglichkeit (stand-by-Betrieb). Für den Fall einer Funktionsstörung und/oder eines schaltungstechnischen Fehlers in einem der beiden Koppelfelder und/oder in einem der beiden zentralen Prozessoren und/oder in einem von ihnen jeweils zugeordneten weiteren Aggregaten besteht in bekannter Weise die Möglichkeit, daß der Vermittlungsbetrieb statt mit dem einen zentralen Koppelfeld, zum Beispiel K1, und dem einen der beiden zentralen Prozessoren, zum Beispiel ZW1, vielmehr mit dem anderen der beiden Koppelfelder, zum Beispiel K2, und dem anderen der beiden zentralen Prozessoren, zum Beispiel ZW2 fortgesetzt wird - und umgekehrt -.

Ebenfalls wurde bereits erläutert - wie auch bereits durch die genannten Literaturstellen bekannt ist -, daß eine Mehrzahl von dezentralen Anschlußgruppen mit je einem Teilkoppelfeld zum außenseitigen Anschluß von Verbindungs- und/oder Teilnehmerleitungen, bzw. entsprechenden Kanälen, und mit einer dezentralen programmierbaren Steuereinrichtung zur Schaltkennzeichenaufnahme von diesen Leitungen, zur Schaltkennzeichenvorverarbeitung und -weiterleitung an den betreffenden zentralen Prozessor und zur Schaltkennzeichenaussendung auf die genannten Leitungen, bzw. Kanäle, ausgestattet ist. So weist zum Beispiel die Anschlußgruppe LTG1 das Teilkoppelfeld GS1 und die dezentrale Steuereinrichtung GP1 auf. An das Teilkoppelfeld GS1 sind außenseitig die Einrichtungen 1DIU1 bis 1DIU4 angeschlossen, die bereits weiter oben erwähnt wurden. Innenseitig sind an das Teilkoppelfeld die beiden Zeitmultiplexleitungen L1/1 und L1/2 (auch als "Linkleitungen" bezeichnet) über weiter unten beschriebene Linkumschaltanordnungen, z.B. LU1, LU2 angeschlossen, die wiedrum mit den beiden zentralen Koppelfeldern K1 und K2 verbunden sind. Jede dieser Zeitmultiplexleitungen umfaßt - wie bereits ebenfalls weiter oben erläutert wurde - eine Anzahl von zum Beispiel dreißig Kanalpaaren, wobei jeweils ein Kanalpaar einen Übertragungskanal in der einen Übertragungsrichtung und einen Übertragungskanal in der anderen Übertragungsrichtung enthält. Jedes dieser Kanalpaare bildet eine Linkleitung. Folglich ist jedes Teilkoppelfeld, zum Beispiel GS1, über zwei Gruppen von Linkleitungen gruppenweise getrennt mit Koppelfeldanschlüssen einerseits des einen und andererseits des anderen der beiden parallel vorgesehenen Koppelfelder verbunden.

Ebenfalls wurde bereits erwähnt - was auch aus den weiter oben genannten Literaturstellen zu entnehmen ist - , daß für einen der Schaltkennzeichenbehandlung dienenden Datenaustausch zwischen den dezentralen Steuereinrichtungen einerseits und dem jeweils betriebsbereiten Prozessor andererseits Datenverbindungen in betriebsbereiten Zustand gebracht bzw. in ihm gehalten werden. Bei dieser Schaltkennzeichenbehandlung handelt es sich darum, daß von Teilnehmern abgegebene Wahlinformationen sowie über bereits aufgebaute oder teilaufgebaute Verbindungswege eintreffende Schaltkennzeichen, die über die dezentralen Anschlußgruppen eintreffen, dem jeweiligen zentralen Prozessor nach einer Vorverarbeitung in der jeweiligen dezentralen Steuereinrichtung zugeführt werden, wodurch dieser Einstellinformationen für sein zentrales Koppelfeld und Steuerinformationen erarbeitet sowie Schaltkennzeichen erarbeitet, die dem jeweiligen dezentralen Steuerwerk wieder zugeleitet werden. Diese Schaltkennzeichen kommen über die betreffenden Verbindungen zur Aussendung, und Steuerinformationen dienen u.a. zur Anschaltung von Hörtonsignalen, Rufsignalen und dergleichen für die betgreffenden Teilnehmer. Der für diese Schaltkennzeichenbehandlung dienende Datenaustausch zwischen jedem der dezentralen Steuerwerke einerseits und dem betreffenden zentralen Prozessor andererseits erfolgt über Datenverbindungen, die zwischen jeder der dezentralen Steuereinrichtungen einerseits über das jeweils in Betrieb befindliche zentrale Koppelfeld mit dem jeweils in Betrieb befindlichen Prozessor hergestellt und ständig in betriebsbereitem Zustand gehalten werden. Diese Datenverbindungen werden ähnlich wie Nachrichtenverbindungen über das zentrale Koppelfeld hergestellt. Sie verlaufen in der bereits angegebenen Weise über die Einrichtungen MB1 und G1, wenn zur Zeit das Koppelfeld K1 und der zentrale Prozessor ZW1 sich in Betrieb befinden.

Nicht nur einer Vermeidung eines Ausfalles einer durch ein PCM-Übertragungssystem gegebenen Verkehrsrichtung (wie oben beschrieben) sondern auch einem weiteren Zweck, nämlich den Vorgang des beschriebenen Ladens der Programminformationen und der vermittlungstechnischen Informationen aus dem in Zusammenhang mit einer vorgesehenen Ersatzschaltung neu in Betrieb gehenden zentralen Prozessor - bzw. aus dem betreffenden Speicher desselben in die dezentralen Steuereinrichtungen der verschiedenen Anschlußgruppen - zeitlich abzukürzen, dient die bereits erwähnte Maßnahme, daß jeweils zwei Anschlußgruppen paarweise einander zugeordnet sind und daß in jeder derselben zum außenseitigen Anschluß von Teilnehmer- und/oder Verbindungsleitungen dienenden und innerhalb der jeweiligen Anschlußgruppe im Normalbetrieb mit ihrem Teilkoppelfeld verbundene Anschlußeinheiten im Notbetrieb oder im Quasi-Notbetrieb (Vorbereitung auf eine Prozessor-Ersatzschaltung) in der beschriebenen Weise umschaltbar sind.

In dieser Betriebssituation bedient also innerhalb von zwei paarweise einander zugeordneten Anschlußgruppen die dezentrale Steuereinrichtung nur einer derselben sämtliche Anschlußeinheiten, wie zum Beispiel Teilnehmeranschlußschaltungen, Mehrfachteilnehmeranschlußschaltungen, Verbindungsleitungsabschlußschaltungen, die auch Verbindungsleitungsmehrfachabschlußschaltungen sein können und dergleichen. Auch werden sämtliche Verbindungen, die über die Anschlußeinheiten beider Anschlußgruppen hergestellt werden, über das Teilkoppelfeld nur der einen der beiden Anschlußgruppen von dieser einen Steuereinrichtung durchgeschaltet. Dabei sind die beiden Anschlußgruppen an sich völlig gleichberechtigt, das heißt diese Umschaltung kann bezüglich dieser beiden Anschlußgruppen auch umgekehrt erfolgen. Die gesamte weitere Betriebsabwicklung erfolgt dann vorläufig in der gleichen Weise, wie in dem weiter oben detailliert beschriebenen Notbetrieb. In dieser Betriebssituation befinden sich sämtliche Anschlußgruppen gleichsam im Notbetrieb.

Nach Herstellung des Notbetriebszustandes ist die Hälfte sämtlicher dezentraler Steuereinrichtungen dem Vermittlungsbetrieb entzogen, ebenso auch die Hälfte sämtlicher Teilkoppelfelder, und zwar jeweils eine dezentrale Steuereinrichtung und jeweils das ihm zugeordnete Teilkoppelfeld pro Paar von Anschlußgruppen.

Eine Ersatzschaltung eines der beiden zentralen Prozessoren durch den jeweils anderen zentralen Prozessor wird also noch während zunächst weiterlaufendem Betrieb des bis dahin in Betrieb befindlichen zentralen Prozessors dadurch vorbereitet, daß sämtliche einander paarweise zugeordneten Anschlußgruppen vom Normalbetrieb in den Notbetrieb übergeführt werden; ferner stellt der andere zentrale Prozessor Datenverbindungen über das ihm zugeordnete andere zentrale Koppelfeld zu den dezentralen Steuereinrichtungen aller esten (s.o.!) Anschlußgruppen her. Dies geschieht in der weiter oben bereits beschriebenen Weise.

Über die zuvor beschriebenen neu hergestellten Datenverbindungen lädt nun der in Zusammenhang mit der bevorstehenden Ersatzschaltung neu in Betrieb gehende zentrale Prozessor die gesamten vermittlungstechnischen Informationen in die betreffenden dezentralen Steuereinrichtungen, bzw. in entsprechende Speicher derselben. Dieser zentrale Prozessor überträgt also anschließend nacheinander an die betreffenden dezentralen Steuereinrichtungen, die zur Zeit dem regulären Vermittlungsbetrieb entzogen sind, die für ihren erneuten Betriebsbeginn erforderlichen Programm- und Vermittlungs-Software zwecks Speicherung derselben in ihnen. Dies geschieht seitens des in Zusammenhang mit der bevorstehenden Ersatzschaltung in Betrieb gehenden zentralen Prozessors bereits vorbereitend während einer Übergangszeit, in der der andere zentrale Prozessor noch den Vermittlungsbetrieb mit denjenigen dezentralen Steuereinrichtungen und Teilkoppelfeldern fortführt, die hierzu vom Normalbetrieb in den Notbetrieb übergeführt worden sind zwecks Vorbereitung der beabsichtigten Ersatzschaltung.

Sind die zuvor beschriebenen, eine Prozessor-Ersatzschaltung vorbereitenden Vorgänge des Ladens von Programminformationen und vermittlungstechnischen Informationen abgewickelt, so erfolgt die Ersatzschaltung. Dabei geht in bekannter Weise die Gesamtheit der zentralen Datenverarbeitungs- und Steuerfunktionen von dem einen zentralen Prozessor auf den anderen zentralen Prozessor über, wobei auch das eine zentrale Koppelfeld durch das andere zentrale Koppelfeld ersetzt wird. Dabei werden die Umschalter LH1 und LHL betätigt, d.h. aus ihrer dargestellten Ruhelage in ihre Arbeitslage gebracht, wodurch die Umschaltung von dem einen zentralen Koppelfeld zu dem anderen vollzogen wird. Es kann hierbei vorgesehen werden, daß bereits bestehende Verbindungen bestehen bleiben können bis zu ihrer Auslösung. Sämtliche neue Verbindungen werden dann mit Hilfe der neu geladenen dezentralen Steuereinrichtungen hergestellt, und zwar über die ihnen jeweils entsprechenden Teilkoppelfelder. Die anderen dezentralen Steuereinrichtungen und die ihnen zugeordneten Teilkoppelfelder werden für weitere Verbindungsherstellungen vorübergehend nicht mehr benutzt.

In diesem Zusammenhang, nämlich dem Vollzug der Ersatzschaltung, erfolgt ferner eine erneute Umschaltung innerhalb der Anschlußgruppen, und zwar nunmehr innerhalb sämtlicher Anschlußgruppen mit Hilfe der in Figur 2 dargestellten Umschaltekontakte 1d1 bis 2d4. Von diesen kehren die Umschalter 2d1 bis 2d4, die - wie oben beschrieben - bei Beginn der Notbetriebs-Situation von ihrer Ruhelage in ihre Arbeitslage gebracht worden waren, nun in ihre Ruhelage wieder zurück, wohingegen die Umschalter 1d1 bis 1d4 aus ihrer Ruhelage in die Arbeitslage gebracht werden. Anschließend wird der Vermittlungsbetrieb also fortgesetzt mit Hilfe derjenigen dezentralen Steuereinrichtungen, die bis zur erfolgten Ersatzschaltung dem normalen Vermittlungsbetrieb entzogen waren, sowie über die zugeordneten Teilkoppelfelder. Diejenigen dezentralen Steuereinrichtungen und zugeordneten Teilkoppelfelder, die bis zum Zeitpunkt der Ersatzschaltung den Vermittlungsbetrieb im Notbetrieb oder im Quasi-Notbetrieb fortgeführt haben, gehen dann zunächst außer Betrieb. Dann aber baut derjenige zentrale Prozessor, der in Zusammenhang mit der Ersatzschaltung in Betrieb gegangen ist, nacheinander auch Datenverbindungen zu allen diesen dezentralen Steuereinrichtungen auf, die im Zeitpunkt der erfolgten Ersatzschaltung zunächst außer Betrieb gegangen sind. Anschließend lädt der zentrale Prozessor die erforderlichen Programminformationen und vermittlungstechnischen Informationen auch in die Speicher dieser dezentralen Steuereinrichtungen. Dies geschieht zeitlich eingestreut in die normalen Vermittlungsvorgänge. Nachdem der dezentrale Prozessor sämtliche dieser dezentralen Steuereinrichtungen mit den erforderlichen Programminformationen und den betreffenden vermittlungstechnischen Informationen geladen hat, wird sukzessive nacheinander bei den paarweise einander zugeordneten Anschlußgruppen die Betriebsweise wieder vom Notbetrieb in den Normalbetrieb zurücküberführt, in dem nun auch die Umschalter 1d1 bis 1d4 wieder in ihre Ruhelage zurückgestellt werden.

Wie bereits ausgeführt wurde, ist zur Vorbereitung eines Ersatzschaltevorganges vorgesehen, daß von demjenigen zentralen Prozessor, z.B. dem zentralen Prozessor ZW2, der beim Ersatzschaltevorgang die zentralen Prozessorfunktionen anstelle des anderen zentralen Prozessors, z.B. ZW1, übernimmt, über das dem hierbei diese Funktionen übernehmenden zentralen Prozessor, z.B. ZW2, zugeordnete zentrale Koppelfeld, z.B. K2, einzeln Datenverbindungen zu den dezentralen Steuereinrichtungen, z. B. GP2, aller derjenigen Anschlußgruppen, z. B. LTG 2, durchgeschaltet werden, also in betriebsbereiten Zustand gebracht werden, bei denen mit Hilfe der Umschalter, z. B. 2d1 bis 2d4 (s.o.!), die zugehörigen Anschlußeinheiten, z. B. 2 DIU1 bis 2DIU4, vom Teilkoppelfeld z. B. GS2, dieser Anschlußgruppe, z. B. LTG 2, zum Teilkoppelfeld, z. B. GS1, der anderen Anschlußgruppe, z. B. LTG1, umgeschaltet worden waren. Eine solche Umschaltung kann also sowohl zur Vorbereitung eines störungsbedingten Notbetriebes der weiter oben beschriebenen Art vorgenommen werden, also lediglich für jeweils nur ein einziges Anschlußgruppen-Paar (LTG1/LTG2), als auch für die Gesamtheit der vorhandenen Anschlußgruppen-Paare zugleich, und zwar zum Zwecke der Vorbereitung der zuvor bereits ausführlich beschriebenen Ersatzschaltung eines der zentralen Prozessoren durch den jeweils anderen zentralen Prozessor. Wie oben bereits ebenfalls ausgeführt wurde, werden bei einer solchen Ersatzschaltung auch die Umschalter LH1, LH2, LG1 und LG2 betätigt. Ist der zentrale Prozessor ZW1 in Betrieb, so befinden sich diese Umschalter in ihrer in Fig. 2 dargestellten Lage. Ist der zentrale Prozessor ZW2 in Betrieb, so werden im Zusammenhang hiermit die zuletzt genannten Umschalter in ihre jeweils andere Schaltstellung gebracht. Dadurch wird erreicht, daß die Teilkoppelfelder GS1 und GS2 anstatt mit dem Zentralkoppelfeld K1 mit dem Zentralkoppelfeld K2 verbunden sind.

Die beschriebene Umschaltung kann unter anderem also Anschlußeinheiten, z.B. 2DIU1 bis 2DIU4, einer Anschlußgruppe betreffen, z.B. LTG2, in deren Teilkoppelfeld, z.B. GS2, oder dezentralem Steuerwerk, z.B. GP2, oder an anderer Stelle eine Betriebsstörung eingetreten ist, kann aber auch sämtliche Anschlußgruppen im Prozessor-Ersatzschaltefall betreffen. Insoweit wirkt sich diese Umschaltung also auf die bezüglich des Teilkoppelfeldes außenseitigen Verbindungswege, in FIG mit Li11 bis Li 24 bezeichnet, zwischen den Anschlußeinheiten und den außenseitigen Teilkoppelfeldanschlüssen aus. Diese Umschaltung ist darüber hinaus aber auch für die innenseitigen Teilkoppelfeldanschlüsse vorgesehen. Im Zusammenhang mit einer solchen Umschaltung werden mit Hilfe der Umschalter u11, u12, u21 und u22 auch die Verbindungen zwischen den Teilkoppelfeldern GS1 und GS2 einerseits und den Zeitmultiplexleitungen L1/1 bis L2/2 andererseits in der aus der Zeichnung ersichtlichen Weise umgeschaltet. Diese letztgenannten Umschalter sind in Fig. 2 in derjenigen Schaltstellung dargestellt, die sie im Normalbetrieb einnehmen. Wenn die Umschalter 2d1 bis 2d4 betätigt werden und sie die Anschlußeinheiten 2DIU1 bis 2DIU4 von den Außenanschlüssen des Teilkoppelfeldes GS2 abtrennen und mit den Außenanschlüssen des Teilkoppelfeldes GS1 verbinden, werden auch die innenseitigen Koppelfeldanschlüsse umgeschaltet mittels der Umschalter u21 und u22. Dadurch wird von den Zeitmultiplexleitungen L2/1 und L2/2, die zu der Anschlußgruppe LTG2 führen, in der zu dieser Anschlußgruppe gehörenden Umschalteeinrichtung LU2 die Zeitmultiplexleitung, z. B. L2/1, die zu dem jeweils in Betrieb befindlichen Prozessor, z.B. ZW1, führt, vom Teilkoppelfeld GS2 (über u21-Ruheseite und LH2-Ruheseite) zum Teilkoppelfeld GS1 (über u21-Arbeitsseite und LG1-Ruheseite) umgeschaltet, wobei in diesem Betriebsfall mit Hilfe des weiteren Umschalters LG1 festgelegt ist, ob diese umgeschaltete Verbindung als eine Zeitmultiplexverbindung zum Zentralkoppelfeld K1 oder zum Zentralkoppelfeld K2 zur Wirkung kommt, in der soeben angesprochenen Betriebssituation also eine Verbindung zum Zentralkoppelfeld K1.

Wird also ein Teilkoppelfeld umgeschaltet, so betrifft dies sowohl ihre außenseitigen Teilkoppelfeldanschlüsse, als auch ihre innenseitigen Teilkoppelfeldanschlüsse. Durch eine Umschaltung in einer Anschlußgruppe, z.B. LTG2, werden demgemäß sowohl ihre Anschlußeinheiten, z.B. 2DIU1 bis 2DIU4, als auch ihre Zeitmultiplex-Anschlußleitungen, z.B. L2/1 bzw. L2/2, von dem Teilkoppelfeld, z.B. GS2, der betreffenden Anschlußgruppe, z.B. LTG2, zum Teilkoppelfeld, z.B. GS1, der jeweiligen Partner-Anschlußgruppe, z.B. LTG1 umgeschaltet. Diese Umschaltung kann in einem Störungsfall zwecks Unwirksammachens der betreffenden Störung in einem einzigen Anschlußgruppen-Paar für eine seiner beiden Anschlußgruppen oder ebenso bei mehreren störungsbetroffenen Anschlußgruppen vorgenommen werden, oder zwecks Vorbereitung obiger Prozessor-Ersatzschaltung auch zugleich bei allen Anschlußgruppen-Paaren.

Für die auch als Linkverbindungen bezeichneten Zeitmultiplex-Anschlußleitungen L1/1 bis L2/2 ist je eine Linkumschaltanordnung LU1 bzw. LU2 vorgesehen. Es ist eine Linkumschaltanordnung pro Anschlußgruppe vorgesehen. Sie kann bei dupliziertem zentralem Koppelfeld und demgemäß ebenfalls duplizierten Zeitmultiplex-Anschlußleitungen z.B. L2/1 und L2/2 gemeinsam für diese vorgesehen sein, wie es in der Zeichnung dargestellt ist, oder sie kann auch selber dupliziert sein, also einzeln pro Zeitmultiplex-Anschlußleitung.

Diese Zeitmultiplex-Anschlußleitungen sind also notbetriebsbedingt von dem Teilkoppelfeld der einen Anschlußgruppe, z.B. LTG2, zu dem Teilkoppelfeld der anderen Anschlußgruppe umschaltbar. Da über diese Zeitmultiplex-Anschlußleitungen jedoch auch der pro Anschlußgruppe vorgesehene Steuerkanal verläuft, ist vorgesehen, (weiter oben auch als "Datenkanal" bezeichnet) mit diesem Kanal anders zu verfahren. Wie oben ausgeführt wurde, kann vorgesehen werden, diejenigen dezentralen Steuereinrichtungen, die bei Notbetrieb nicht an der Abwicklung des Vermittlungsbetriebes beteiligt sind, bei Vorbereitung einer Prozessor-Ersatzschaltung mit demjenigen zentralen Prozessor zu verbinden, der ersatzschaltend in Betrieb gehen und den anderen Prozessor ablösen soll. In solchen Betriebsfällen aber, vorzugsweise bei Umschaltung immer nur in einem Anschlußgruppenpaar (wobei es sich z.B. um Umschaltungen zur Prüf-Routine oder um einzeln auftretende Betriebsstörungen handeln kann), in denen der in Betrieb befindliche Prozessor, z.B. ZW1,mit der dezentralen Steuereinrichtung einer Anschlußgruppe zwecks Austausches von Daten, z.B. zu Prüfzwecken oder irgendwelchen steuerungstechnischen Zwecken, treten muß, bleiben die weiter oben hinsichtlich Bedeutung und Arbeitsweise bereits beschriebenen Kontakte LG1 bis LH2 unbetätigt. Vielmehr wird dabei erfindungsgemäß der für die Datenverbindung zwischen dem betreffenden Prozessor, z.B. ZW1, und der betreffenden dezentralen Steuereinrichtung, z.B. GP2, verwendete Kanal auf der betreffenden Zeitmultiplex-Anschlußleitung (Linkverbindung), z.B. L2/1, die ja notbetriebsbedingt von einem Teilkoppelfeld zum anderen, z.B. von GS2 nach GS1, umgeschaltet wurde, zeitmultiplextechnisch wieder zurückgeschaltet zu der dezentralen Steuereinrichtung derjenigen Anschlußgruppe, deren Teilkoppelfeld notbetriebsbedingt außer Betrieb gegangen ist.

Der Datenkanal zwischen einer dezentralen Steuereinrichtung, z.B. GP1, und einem zentralen Prozessor, z.B. ZW1, verläuft also über eine Zeitmultiplex-Anschlußleitung, z.B. L1/1 und die dieser zugeordnete Linkumschaltanordnung z.B. LU1. Von hieraus führt er über eine Linkabschlußschaltung, z.B. GL1, (in "telcom-report" mit "LIU" bezeichnet) über einen Steuerabschluß, z.B. GP2, zum dezentralen Steuerwerk, z.B. GP1. In der Linkabschlußschaltung, z.B. GL, die pro Anschlußgruppe, z.B. LTG1, dem Teilkoppelfeld, z.B. GS1, zugeordnet ist, ist ein nichtgezeigter Ausgleichsspeicher vorgesehen, der in bekannter Weise dazu dient, bei Phasenabweichungen und bei Pulsrahmenabweichungen die erforderlichen zeitmäßigen Anpassungen wiederherzustellen. Diese Ausgleichsspeicher in den Linkabschlußschaltungen, z.B. GL1 und GL2, der betreffenden beiden Anschlußgruppen werden hierzu pulstaktsynchron gesteuert. Sie erhalten hierzu ihren Pulstakt in der Notbetriebssituation von der zu derjenigen Anschlußgruppe, z.B. LTG1, gehörenden Umschalteeinrichtung, z.B. LU1, deren Teilkoppelfeld, z.B. GS1, hierbei in Betrieb bleibt, also nicht notbetriebsbedingt dem Vermittlungsbetrieb entzogen wird, wie z.B. das Teilkoppelfeld GS2.-

Ausgleichsspeicher sind an sich bekannt, z.B. durch die Euopäische Patentschrift EP-B-0 057 758. Die Umschalter u21 und u22 bzw. u11 und u12 sind zweckmäßig als elektronisch arbeitende Schalter in an sich bekannter Weise ausgebildet.

Wird nun von einer Anschlußgruppe die dezentrale Steuereinrichtung und das Teilkoppelfeld außer Betrieb genommen, so werden im Zuge der dies bewerkstelligenden Umschaltung die Anschlußeinheiten dieser Anschlußgruppe, z.B. 2DIU1 bis 2DIU4, und die Zeitmultiplex-Anschlußleitungen, z.B. L2/1 und L2/2, die von dieser Anschlußgruppe zum zentralen (gedoppelten) Koppelfeld führen, mit Hilfe der beschriebenen Umschalter, z.B. 2d1 bis 2d4 und u21 und u22, zum Teilkoppelfeld der jeweiligen Partner-Anschlußgruppe umgeschaltet. Da in diesem Zusammenhang vorgesehen ist, daß zwischen außenseitigen und innenseitigen Teilkoppelfeldanschlüssen Teilkoppelfeldverbindungen vorbereitend hergestellt werden, wird hierdurch erreicht, daß im Zuge einer Umschaltung Verbindungen, die bereits durchgeschaltet sind, nicht unterbrochen werden müssen. Hierzu werden im normalen Vermittlungsbetrieb von jeder der beiden dezentralen Steuereinrichtungen, die zu einem Paar von Anschlußgruppen gehören, über dezentrale, den Anschlußgruppen jeweils individuelle Übertragungswege Verbindungsdaten an die jeweils entsprechende Partner-Steuereinrichtung übertragen. Jede der beiden dezentralen Steuereinrichtungen baut anhand dieser übertragenen und jeweils von ihr empfangenen Verbindungsdaten Verbindungen über das Teilkoppelfeld der jeweils zugeordneten Anschlußgruppe auf, und zwar zu außenseitigen Teilkoppelfeldanschlüssen, mit denen bei einer Umschaltung die Anschlußeinheiten einer ersten Anschlußgruppe zu dem Teilkoppelfeld einer zweiten Anschlußgruppe der jeweiligen Partner-Anschlußgruppe durch die Umschaltung verbindbar sind.

Die Durchführung der Umschaltungen, z.B. in der Anschlußgruppe LTG2, erfolgt also mittels der dezentralen Steuereinrichtungen, z.B. GP1, in der Weise, daß die dezentrale Steuereinrichtung jeweils einer Anschlußgruppe die Umschaltung in der betreffenden anderen Anschlußgruppe durchführt. Hierzu sind entsprechend Steuerwege, z.B. Wy, zwischen einerseits jeder der dezentralen Steuereinrichtungen, z.B. GP1, jeder der Anschlußgruppen und andererseits den Umschaltern, z.B. 2d1 - 2d4, in der jeweils anderen Anschlußgruppe, z.B. GP2, vorgesehen. Über diese Steuerwege sind auch die weiteren dargestellten Umschalter u21 und u22, auch LG2 LH2 steuerbar.

Wie ausgeführt wurde, können die erläuterten Umschaltungen dem Zweck dienen, bei einer Betriebsstörung in einer Anschlußgruppe, z.B. an deren dezentraler Steuerung (GP) oder an deren Teilkoppelfeld (GS) oder auch an deren zum zentralen Koppelfeld führenden Zeitmultiplex-Anschlußleitungen (L1/1 bis L2/2), die in dieser Anschlußgruppe von ihren Anschlußeinrichtungen zu außenseitigen Teilkoppelfeldanschlüssen ihres Teilkoppelfeldes führenden anschlußgruppeninternen Internleitungen (Li...) - und damit diese Anschlußeinrichtungen selbst - von diesen Teilkoppelfeldanschlüssen auf diejenigen der jeweiligen Partner-Anschlußgruppe umzuschalten. Damit können Verbindungswege, die von anderen Vermittlungsstellen her kommen und mit diesen Anschlußeinrichtungen verbunden sind, weiter in Betrieb bleiben, indem für sie Durchschaltemöglichkeiten bereitgestellt sind, die über das Teilkoppelfeld der jeweiligen Partner-Anschlußgruppe bestehen. Dabei können auch die Zeitmultiplex-Anschlußleitungen, z.B. L2/1 oder L2/2, mit umgeschaltet werden mittels der Umschalter LG2 und LH2, oder auch nicht.

Wird eine Umschaltung also wegen einer Betriebsstörung in einer Anschlußgruppe vorgenommen, so sind den betreffenden Schaltmaßnahmen nur die beiden jeweils einander paarweise zugeordneten Anschlußgruppen unterworfen. Ist die betreffende Betriebsstörung wieder behoben, so erfolgt eine Rück-Umschaltung der Internleitungen. Dies erfolgt zweckmäßig sinngemäß nach dem gleichen Regeln, wie sie weiter oben detailliert für die Umschaltevorgänge beim Eintreten einer Betriebsstörung erläutert wurden.

## Patentansprüche

1. Verfahren zum Betrieb von zentralgesteuerteh Zeitmultiplex-Fernmeldevermittlungsanlagen, insbesondere PCM-Fernsprechvermittlungsanlagen, in denen ein der Verbindungsdurchschaltung dienendes zentrales Koppelfeld (K1, K2) samt einem unter anderem dessen Steuerung sowie einer hierfür erforderlichen Schaltkennzeichenverarbeitung dienenden programmgesteuerten zentralen Prozessor (ZW1, ZW2) vorgesehen ist, und in denen eine Mehrzahl von dezentralen Anschlußgruppen (LTG1, LTG2) mit je einem Teilkoppelfeld (GS1, GS2) zum außenseitigen Anschluß von Verbindungs-und/oder Teilnehmerleitungen (1u1... 1u4, 2u1...2u4) und mit einer dezentralen Steuereinrichtung (G P1, GP2) zur Schaltkennzeichenaufnahme von diesen Leitungen, zur Schaltkennzeichenvorverarbeitung und -weiterleitung an den zentralen Prozessor und zur Schaltkennzeichenaussendung auf diese Leitungen ausgestattet ist, und in denen in diesen Anschlußgruppen die Teilkoppelfelder innenseitig über Zeitmultiplex-Linkleitungen (L1/1, L2/2, L2/1, L2/2) mit Anschlüssen des Koppelfeldes verbunden sind, und in denen für einen der obigen Schaltkennzeichenbehandlung dienenden Datenaustausch zwischen den dezentralen Steuereinrichtungen (GP1, GP2) einerseits und dem Prozessor (Zw1, ZW2) andererseits jeweils pro dezentrale Steuereinrichtung je eine Datenverbindung von jenem über das Koppelfeld und über je einen Kanal der betreffenden Zeitmultiplex-Linkleitung zu den dezentralen Steuereinrichtungen in betriebsbereiten Zustand gebracht bzw. in ihm gehalten wird, und in denen jeweils zwei Anschlußgruppen paarweise einander zuordnet und in jeder derselben zum außenseitigen Anschluß von Teilnehmer- und/oder Verbindungs-Leitungen dienenden und innerhalb der jeweiligen Anschlußgruppe im Normalbetrieb mit ihrem Teilkoppelfeld verbundene Anschlußeinheiten(1DIU1, 1DLU2, 2DLU1, 2 DLU2), z.B. Teilnehmeranschlußschaltungen, Mehrfachteilnehmeranschlußschaltungen, Verbindungsleitungs(-mehrfach-)abschlußschaltungen und dergleichen, im Notbetrieb teilweise umschaltbar sind, wodurch die Anschlußeinheiten jeweils einer ersten dieser beiden Anschlußgruppen notbetriebsbedingt zusätzlich an das Teilkoppelfeld der jeweils anderen, also einer jeweils zweiten Anschlußgruppe angeschaltet werden, und wodurch für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird,
**dadurch gekennzeichnet**,
daß den Linkleitungen (L1/1, L1/2; L2/1, L2/2) je eine eigene Umschalteeinrichtung (LU1, LU2) pro Anschlußgruppe (LTG1, LTG2) zugeordnet wird,
die Linkleitungen (L1/1, L1/2; L2/1, L2/2) notbetriebsbedingt von dem Teilkoppelfeld (GS1, GS2) der einen Anschlußgruppe (LTG1, LTG2) zu dem der anderen Anschlußgruppe (LTG2, LTG1) umschaltbar sind, und
daß hierbei der für die Datenverbindung zwischen dem zentralen Prozessor (ZW1, ZW2) und der außer Betrieb genommenen dezentralen Steuereinrichtung (GP1, GP2) als Steuerkanal verwendete Kanal in einer der betreffenden Linkleitung (L1/1, L1/2; L2/1, L2/2) zugeordneten Linkabschlußschaltung (GL1, GL2) zeitmultiplextechnisch zurückgeschaltet wird zu der dezentralen Steuereinrichtung (GP1, GP2) derjenigen Anschlußgruppe (LTG1, LTG2), deren Teilkoppelfeld (GS1, GS2) notbetriebsbedingt außer Betrieb gegangen ist.

2. Verfahren nach Anspruch 1,
**dadurch gekennzeichnet**,
daß der für die Datenverbindung verwendete Kanal von der Umschalteeinrichtung (LU1, LU2) über eine der jeweiligen Anschlußgruppe (LTG1, LTG2) zugeordnete Linkabschlußschaltung (GL1, GL2) zu der dezentralen Steuereinrichtung dieser Anschlußgruppe geführt verläuft und daß die Umschalteeinrichtung einer Anschlußgruppe hierzu außer mit deren Linkabschlußschaltung auch mit der der Partner-Anschlußgruppe verbunden ist.

3. Verfahren nach Anspruch 2,
**dadurch gekennzeichnet**,
daß in jeder Linkabschlußschaltung die Verbindung zu den Umschalteeinrichtungen der beiden einander zugeordneten Anschlußgruppen über einen zeitmultiplextechnischen Ausgleichsspeicher verläuft, der der pulsrahmenmäßigen und pulsphasenmäßigen zeitlichen Anpassung der Nachrichten dient.

4. Verfahren nach Anspruch 3,
**dadurch gekennzeichnet**,
daß die Ausgleichsspeicher pulstaktsynchron gesteuert werden und hierzu in der Notbetriebssituation gemeinsam ihren Pulstakt von der zu derjenigen Anschlußgruppe (LTG1, LTG2) gehörenden Umschalteeinrichtung (LU1, LU2) erhalten, deren Teilkoppelfeld (GS1, GS2) hierbei nicht außer Betrieb genommen wird.

## Claims

1. Method for operating centrally controlled time-division multiplex telecommunication exchanges, preferably PCM telephone exchanges, in which a central switching network (K1, K2) serving to switch through connections is provided together with a program-controlled central processor (ZW1, ZW2) serving inter alia for the control thereof as well as for the processing of switching signals necessary for this purpose, and in which a plurality of decentralized line/trunk groups (LTG1, LTG2) are equipped in each case with a subswitching network (GS1, GS2) for the external connection of interexchange trunk and/or subscriber lines (1u1...1u4, 2u1...2u4) and with a decentralized control device (GP1, GP2) for receiving switching signals from said lines, for preprocessing and forwarding switching signals to the central processor, and for transmitting switching signals on said lines, and in which the subswitching networks are connected internally in said line/trunk groups to terminals of the switching network via time-division multiplex link lines (L1/1, L2/2, L2/1, L2/2), and in which for a data exchange serving for the abovementioned switching signal handling between the decentralized control devices (GP1, GP2) on the one hand and the processor (ZW1, ZW2) on the other hand, in each case one data connection from the latter via the switching network and via in each case one channel of the respective time-division multiplex link line to the decentralized control devices is brought into the operational state or is held therein for each decentralized control device in each case, and in which in each case two line/trunk groups are assigned to one another in pairs and in each of the latter, line/trunk units (1DIU1, 1DLU2, 2DLU1, 2DLU2), for example subscriber line circuits, multiple subscriber line circuits, interexchange trunk (multiple) termination circuits and the like, which serve for the external connection of subscriber lines and/or interexchange trunk lines and are connected in normal operation within the respective line/trunk group to its subswitching network, can be switched over partially in emergency operation, with the result that the line/trunk units of in each case a first of said two line/trunk groups are additionally connected as a result of the emergency operation to the subswitching network of the respective other one, that is to say of a second line/trunk group in each case, and with the result that the corresponding switching signal processing as well as subswitching network setting for the connections running via the switched-over line/trunk units are likewise executed by the decentralized control device of the other, that is to say second, line/trunk group, characterized in that assigned to each of the link lines (L1/1, L1/2; L2/1, L2/2) is its own changeover device (LU1, LU2) for each line/trunk group (LTG1, LTG2), in that as a result of the emergency operation the link lines (L1/1, L1/2; L2/1, L2/2) can be switched over from the subswitching network (GS1, GS2) of the one line/trunk group (LTG1, LTG2) to that of the other line/trunk group (LTG2, LTG1), and in that in this case the channel used as control channel for the data connection between the central processor (ZW1, ZW2) and the decentralized control device (GP1, GP2) taken out of operation is switched back employing time-division multiplexing techniques in a link termination circuit (GL1, GL2) assigned to the respective link line (L1/1, L1/2; L2/1, L2/2) to the decentralized control device (GP1, GP2) of the particular line/trunk group (LTG1, LTG2) whose subswitching network (GS1, GS2) has discontinued operation as a result of the emergency operation.

2. Method according to Claim 1, characterized in that the channel used for the data connection runs guided from the changeover device (LU1, LU2) via a link termination circuit (GL1, GL2) assigned to the respective line/trunk group (LTG1, LTG2) to the decentralized control device of said line/trunk group, and in that, in addition to its link termination circuit, the changeover device of a line/trunk group is connected for this purpose also to the partner line/trunk group.

3. Method according to Claim 2, characterized in that in each link termination circuit the connection to the changeover devices of the two line/trunk groups assigned to one another runs via a time-division multiplex compensation buffer which serves for the time alignment of the messages with respect to pulse frames and pulse phases.

4. Method according to Claim 3, characterized in that the compensation buffers are controlled pulse-clock synchronously, and for this purpose in the emergency operation situation receive their pulse clock together from the changeover device (LU1, LU2) associated with the particular line/trunk group (LTG1, LTG2) whose subswitching network (GS1, GS2) is not taken out of operation here.

## Revendications

1. Procédé d'exploitation d'installations de commutation de télécommunications à multiplexage temporel et à commande centrale, notamment d'installations de commutation téléphonique MIC,
dans lesquelles il est prévu un champ de couplage central (K1,K2) servant à l'interconnexion des liaisons, ainsi qu'un processeur central (ZW1,ZW2), qui est commandé par programme et qui sert entre autre à la commande du champ de couplage ainsi qu'à réaliser le traitement, nécessaire à cet effet, de signaux caractéristiques de commutation,
dans lesquelles une multiplicité de groupes de raccordement décentralisés (LTG1,LTG2) sont munis respectivement d'un champ de couplage partiel (GS1, GS2) pour le raccordement, côté extérieur, de lignes de jonction et/ou de lignes d'abonné (1u1...1u4,2u1...2u4), et d'un dispositif décentralisé de commande (GP1,GP2) pour la réception de signaux caractéristiques de commutation par ces lignes, pour le prétraitement de signaux caractéristiques de commutation et leur transmission au processeur central et pour l'émission de signaux caractéristiques de commutation dans ces lignes, dans lesquelles, les champs de couplage partiels sont reliés, dans ces groupes de raccordement, côté intérieur, par l'intermédiaire de lignes de raccordement à multiplexage temporel (L1/1,L2/2,L2/1,L2/2), à des bornes du champ de couplage,
dans lesquelles, pour un échange de données, utilisé pour le traitement, indiqué plus haut, des signaux caractéristiques de commutation, entre les dispositifs décentralisés de commande (GP1,GP2), d'une part, et le processeur (Zw1, ZW2), d'autre part, pour chaque dispositif décentralisé de commande respectivement une liaison de données partant de chaque processeur, et passant par le champ des couplage et par un canal respectif de la ligne considérée de raccordement à multiplexage temporel, pour aboutir aux dispositifs décentralisés de commande est amenée à l'état prêt à fonctionner ou est maintenue dans cet état,
dans lesquelles respectivement deux groupes de raccordement sont associés entre eux par couples et dans chacun d'eux, des unités de raccordement (1DIU1, 1DIU2, 2DIU1, 2DIU2), par exemple des circuits d'abonnés, des circuits de raccordement d'abonnés multiples, des circuits de terminaison (multiples) de lignes de jonction et analogues, qui sont utilisés pour le raccordement, côté extérieur, de lignes d'abonné et/ou de lignes de jonction et qui sont reliées, en fonctionnement normal, à l'intérieur du groupe de raccordement respectif, au champ de couplage partiel de ce groupe, peuvent être commutées partiellement sur un fonctionnement d'urgence, ce qui a pour effet que les unités de raccordement respectivement d'un premier de ces deux groupes de raccordement sont reliées en supplément, d'une manière nécessitée par le fonctionnement d'urgence, au champ de couplage partiel de l'autre groupe de raccordement respectif, c'est-à-dire d'un second groupe de raccordement respectif, et que, pour les liaisons s'étendant sur les unités de raccordement commutées, le traitement correspondant des signaux caractéristiques de commutation ainsi que le réglage du champ de couplage partiel sont également exécutés par le dispositif décentralisé de commande de l'autre, c'est-à-dire du second groupe de raccordement,
caractérisé par le fait
qu'aux lignes de raccordement (L1/1, L1/2; L2/1, L2/2) est associé respectivement un dispositif particulier de commutation (LU1, LU2) pour chaque groupe de raccordement (LTG1, LTG2),
les lignes de raccordement (L1/1, L1/2; L2/1, L2/2) peuvent être commutées, d'une manière conditionnée par le fonctionnement d'urgence, du champ de couplage partiel (GS1, GS2) d'un groupe de raccordement (LTG1,LTG2) à celui de l'autre groupe de raccordement (LTG2,LTG1), et
que le canal, utilisé en tant que canal de commande pour la transmission de données entre le processeur central (ZW1,ZW2) et le dispositif de commande décentralisé (GP1,GP2) mis hors service, est commuté en retour, conformément à la technique du multiplexage temporel, dans un circuit de raccordement de liaison (GL1,GL2), qui est associé à la ligne de raccordement concernée (L1/1, L1/2; L2/1, L2/2), sur le dispositif décentralisé de commande (GP1,GP2) du groupe de raccordement (LTG1, LTG2), dont le champ de couplage partiel (GS1,GS2) est mis hors service, d'une manière conditionnée par le fonctionnement d'urgence.

2. Procédé suivant la revendication 1, caractérisé par le fait que le canal utilisé pour la transmission des données s'étend depuis le dispositif de commutation (LU1,LU2), en passant par un circuit de raccordement de liaison (GL1,GL2) associé au groupe de raccordement respectif (LTG1,LTG2), pour aboutir au dispositif décentralisé de commande de ce groupe de raccordement, et que le dispositif de commutation d'un groupe de raccordement est relié à cet effet, non seulement au circuit de raccordement de liaison de ce groupe, mais également à celui du groupe de raccordement partenaire.

3. Procédé suivant la revendication 2, caractérisé par le fait que, dans chaque circuit de raccordement de liaison, la liaison avec les dispositifs de commutation des deux groupes de raccordement associés l'un à l'autre passe par une mémoire de compensation, qui est réalisée selon la technique du multiplexage temporel et qui est utilisée pour réaliser l'adaptation dans le temps des informations, en fonction de la trame d'impulsions et de la phase des impulsions.

4. Procédé suivant la revendication 3, caractérisé par le fait que les mémoires de compensation sont commandées d'une manière synchrone du point de vue des cadences d'impulsions et, à cet effet dans le cas du fonctionnement d'urgence, reçoivent en commun leur cadence impulsionnelle de la part du dispositif de commutation (LU1,LU2), qui appartient au groupe de raccordement (LTG1,LTG2) et dont le champ de couplage partiel (GS1,GS2) n'est pas mis hors service.
